## Europäisches Patentamt
## European Patent Office
## Office européen des brevets

(19)

(11) Veröffentlichungsnummer: **0 048 322**
**B1**

(12) **EUROPÄISCHE PATENTSCHRIFT**

(45) Veröffentlichungstag der Patentschrift:
28.09.83

(21) Anmeldenummer: 81105590.4

(22) Anmeldetag: 16.07.81

(51) Int. Cl.³: **F 04 C 2/14,** F 01 C 21/10 //
B23P11/00

(54) Zahnradmaschine mit Zentrierungsmittel für die Gehäusedeckel.

(30) Priorität: 20.09.80 DE 3035663

(43) Veröffentlichungstag der Anmeldung:
31.03.82 Patentblatt 82/13

(45) Bekanntmachung des Hinweises auf die Patenterteilung:
28.09.83 Patentblatt 83/39

(84) Benannte Vertragsstaaten:
DE FR GB IT

(56) Entgegenhaltungen:
FR-A-2 163 936
FR-A-2 278 954
US-A-1 584 207
US-A-2 531 726

(73) Patentinhaber: ROBERT BOSCH GMBH, Postfach 50,
D-7000 Stuttgart 1 (DE)

(72) Erfinder: Dworak, Wilhelm, Waiblingerstrasse 75,
D-7000 Stuttgart (DE)
Erfinder: Fader, Martin, Vogelsangstrasse 7,
D-7542 Schömberg 4 (DE)
Erfinder: Jöns, Claus, Kirchhofstrasse 35,
D-7123 Sachsenheim (DE)
Erfinder: Mayer, Siegfried, Th.-Heuss-Strasse 24,
D-7143 Vaihingen (DE)
Erfinder: Müller, Karl-Heinz, Dipl.-Ing., Gerokstrasse 6/2,
D-7143 Vaihingen (DE)
Erfinder: Rasper, Manfred, Hummelbergweg 42,
D-7250 Leonberg 4 (DE)
Erfinder: Schuldt, Dietrich, Fraschstrasse 4,
D-7015 Korntal (DE)
Erfinder: Taimon, Wolfgang, Bahnhofstrasse 68,
D-7136 Oetisheim (DE)
Erfinder: Wolff, Günter, Scheerwiesenweg 4,
D-7141 Schwieberdingen (DE)

BUNDESDRUCKEREI BERLIN

Zahnradmaschine mit Zentrierungsmittel für die Gehäusedeckel

Die Erfindung geht aus von einer Zahnradmaschine nach der Gattung des Hauptanspruchs. Es ist aus der FR-A-2 278 954 bekannt, bei derartigen Maschinen den Gehäusedeckel gegenüber dem Gehäuse dadurch zu zentrieren und zu fixieren, daß die beiden Teile zuerst ausgerichtet werden, worauf in diesen fluchtende Bohrungen hergestellt werden, in welche Sicherungsstifte bei der Montage passend eingesetzt werden. Dies ist aufwendig, da — wie ausgeführt, die Teile zuvor sehr genau auszurichten sind und die Bohrungen fluchten müssen. Das vorherige Ausrichten der Bauteile wirkt sich in einer Serienfertigung verteuernd aus.

Die erfindungsgemäße Anordnung mit den kennzeichnenden Merkmalen des Hauptanspruchs hat demgegenüber den Vorteil, daß die Teile vor dem Zusammenbau nicht genau ausgerichtet zu werden brauchen, was zu einer einfacheren und billigeren Fertigung und Montage führt. Besondere Ausführungsarten sind in den abhängigen Patentansprüchen angegeben.

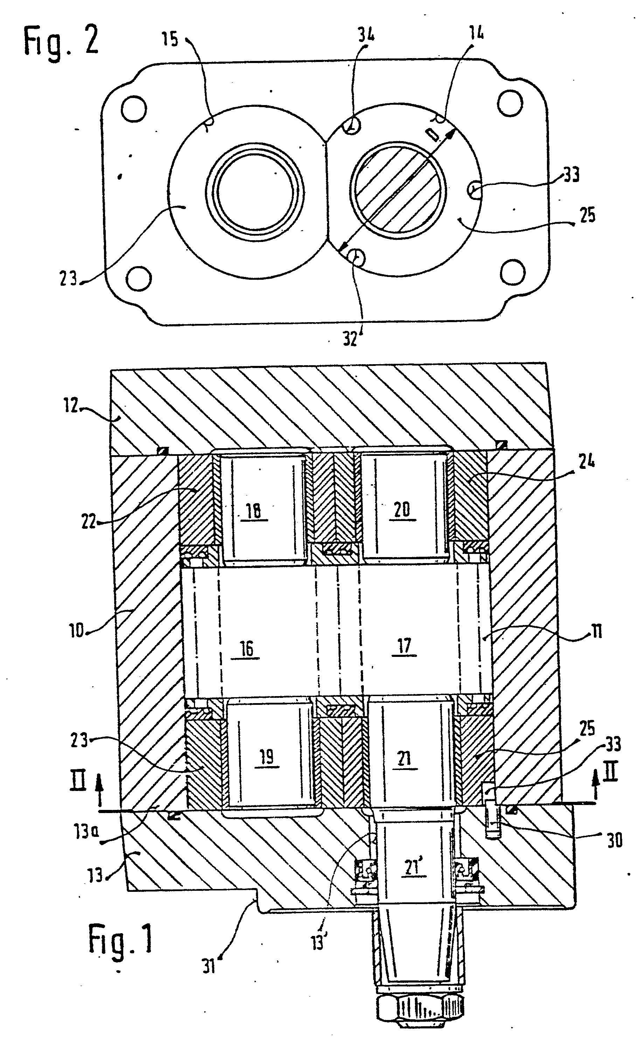

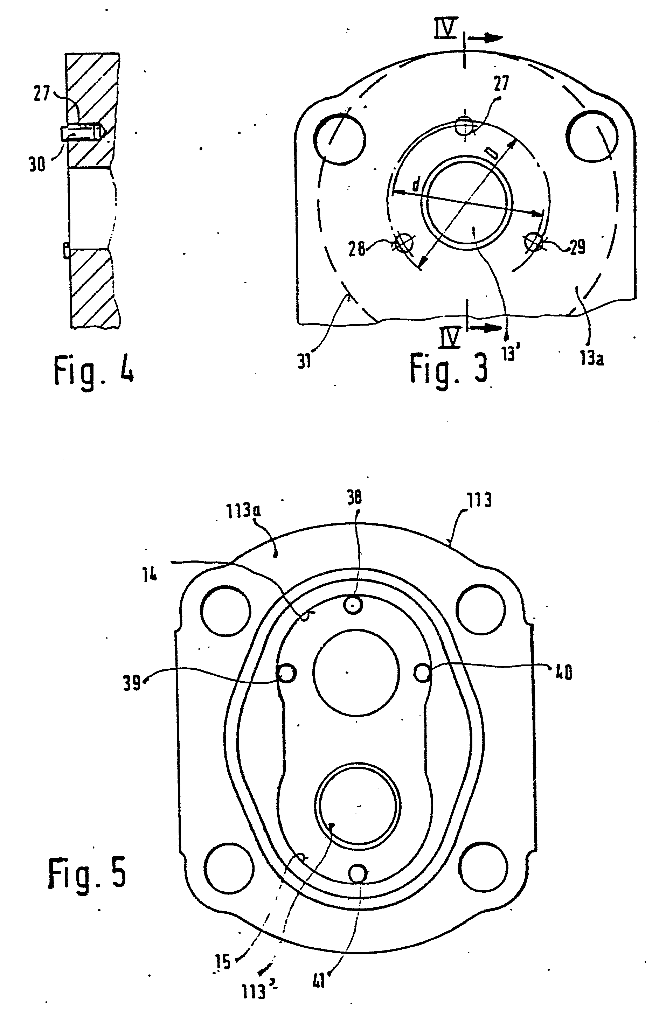

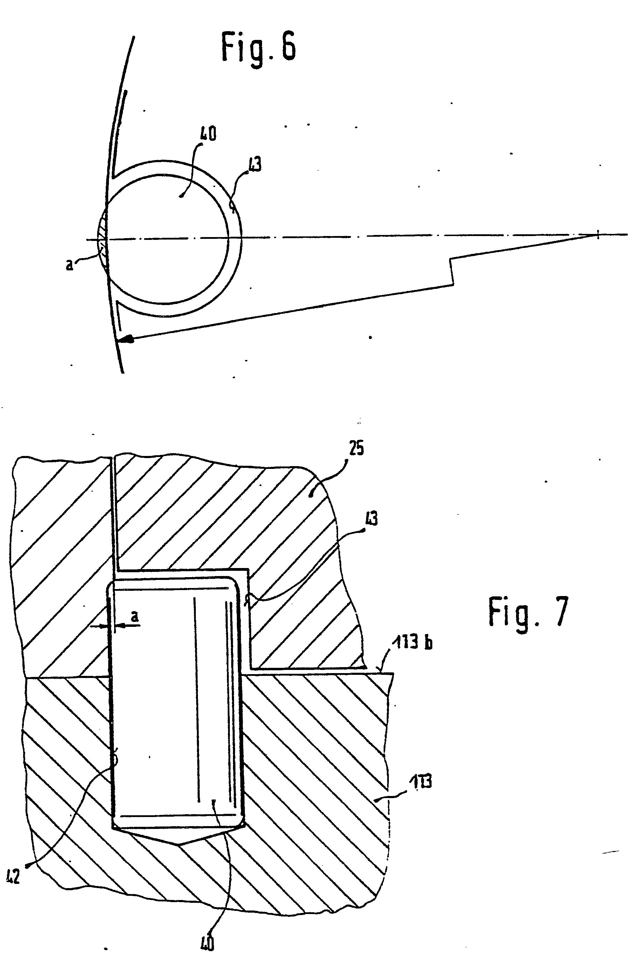

Ein Ausführungsbeispiel der Erfindung ist in der Zeichnung dargestellt und in der nachfolgenden Beschreibung näher erläutert. Sie zeigt in Fig. 1 einen Längsschnitt durch eine Zahnradpumpe, in Fig. 2 einen Schnitt längs II-II nach Fig. 1, in Fig. 3 einen Teil des Gehäusedeckels, in Fig. 4 einen Schnitt längs IV-IV nach Fig. 3, in den Fig. 5 bis 7 eine Abwandlung des Ausführungsbeispiels nach der Fig. 1.

Mit 10 ist das Gehäuse einer Zahnradmaschine bezeichnet, dessen durchgehender Innenraum der Gehäuseausnehmung 11 beidseitig durch Gehäusedeckel 12, 13 verschlossen ist. Der Innenraum 11 ist gebildet aus zwei sich überschneidenden Bohrungen 14, 15 so daß er im Querschnitt etwa die Form einer Acht erhält.

Im Innenraum 11 befinden sich zwei im Außeneingriff miteinander kämmende Zahnräder 16, 17, deren Wellenzapfen 18 bis 21 in buchsenförmigen Lagerkörpern 22 bis 25 gelagert sind. Der Wellenzapfen 21 hat einen Fortsatz 21', der durch eine Durchgangsbohrung 13' im Gehäusedeckel 13 nach außen dringt und zum Antrieb der Zahnradpumpe dient.

Wesentlich ist nun, daß der Gehäusedeckel 13 gegenüber dem Innenraum 11 genau zentriert und fixiert werden muß. Das Zentrieren geschieht dadurch, daß an der dem Gehäuse 10 zugewandten Innenseite 13a des Gehäusedeckels auf einem um die Bohrung 14 konzentrisch verlaufenden Kreis mit dem Durchmesser d in regelmäßigem Abstand mehrere Sackbohrungen 27 bis 29 ausgebildet sind. Der Durchmesser d ist zweckmäßigerweise etwas kleiner als der Durchmesser D der Bohrung 14. In jede der Sackbohrungen 27 bis 29 wird nach der Planbearbeitung der Innenseite 13a ein Stift 30 aus Stahl, Aluminium oder einem ähnlichen Werkstoff eingepreßt und zwar derart, daß sein Kopf mindestens noch einige Millimeter über die Innenseite 13a vorsteht. Anschließend werden die Stifte 30 von außen her auf einen Durchmesser D abgedreht, welcher dem Durchmesser D der Bohrung 14 entspricht. Zum Überdrehen der Stifte wird der Gehäusedeckel 13 an einem zylindrischen Einpaß 31 aufgenommen, welcher sich an der Außenseite des Gehäusedeckels 13 befindet und genau konzentrisch zur Bohrung 13' verläuft. Dieser Einpaß ist in Fig. 3 gestrichelt dargestellt. Nun ist es nur noch notwendig, am Lagerkörper 25 eine der Anzahl der Stifte und deren Abstand entsprechende Anzahl von Ausnehmungen 32 bis 34 auszubilden, in welche die Stifte beim Aufsetzen des Gehäusedeckels 13 auf das Gehäuse eintauchen können. Es ist zu bemerken, daß die Ausnehmungen 32 bis 34 nichts mit der Ausrichtung des Gehäusedeckels gegenüber dem Gehäuse zu tun haben. Diese Zentrierung erfolgt lediglich durch den Durchmesser D und den Durchmesser der Gehäusebohrung 14. Dies bedeutet, daß die Ausnehmungen 32 bis 34 im Durchmesser um einiges größer sein können als die Durchmesser der Stifte 27 bis 29. Nach dem Aufsetzen des Gehäusedeckels wird dieser mit dem Gehäuse verschraubt.

Natürlich ist es auch möglich, die Sackbohrungen für die Stifte so genau herzustellen, daß die Stifte nicht bearbeitet zu werden brauchen, sondern passend in die Gehäusebohrung tauchen, passend, d. h. mit geringem Spiel. Dieses gilt auch für das folgende Ausführungsbeispiel.

Wie das Ausführungsbeispiel nach den Fig. 5 bis 7, insbesondere Fig. 5, zeigt, ist es nicht notwendig, alle Stifte auf einem zur Bohrung 14 konzentrischen Kreis anzuordnen. Bei diesem Ausführungsbeispiel sind an der Innenseite 113a des Gehäusedeckels 113 vier Stifte 38 bis 41 an einander diametral gegenüberliegenden Stelle wiederum in im Gehäusedeckel ausgebildeten Sackbohrungen 42 fest angeordnet, wobei ihre Köpfe einige Millimeter über die Innenfläche 113a vorstehen. Die Stifte sind so angeordnet, daß sie um einen geringen Betrag über die Kontur des Innenraums 11 — d. h. über die Bohrungen 14, 15 vorstehen. Wie beim vorigen Ausführungsbeispiel sind in den Lagerkörpern wiederum Ausnehmungen 43 für die Köpfe der Stifte ausgebildet, in welche diese beim Aufsetzen des Gehäusedeckels eintauchen. Der eventuell über den Gehäuseinnenraum vorstehende Werkstoff an den Stiften wird beim Aufsetzen des Gehäusedeckels durch die Wand des Innenraums verdrängt, falls der Werkstoff der Stifte weicher ist, als derjenige des Gehäuses. Im umgekehrten Fall wird Werkstoff an der Wand des Gehäuses verdrängt. Dies braucht nicht so zu sein, wenn die Lage der Sackbohrungen für Stifte genau genug ist. Eine Bearbeitung der Stifte ist jedenfalls dann nicht notwendig.

Das zuletzt geschilderte Ausführungsbeispiel eignet sich vor allem für Maschinen, bei denen das Druckmittel axial von der Seite des Gehäusedeckels her zugeführt wird. Dann nämlich würden die Stifte 32, 34 nach dem ersten Ausführungsbeispiel in die Zuführung zu liegen kommen.

**Patentansprüche**

1. Zahnradmaschine — Pumpe oder Motor — mit im Innen- oder Außeneingriff kämmenden Zahnrädern (16, 17), die in einer mindestens auf einer Seite von einem Deckel (13, 113) verschlossenen Gehäuseausnehmung (11) angeordnet sind und wobei im Deckel eine von der Triebwelle (21, 21') mit Spiel durchdrungene Durchgangsbohrung (13') ausgebildet ist, dadurch gekennzeichnet, daß an der Innenseite (13a, 113a) des Deckels (13, 113) mehrere Stifte (30; 38 bis 41) derart angeordnet sind, daß sie beim Aufsetzen des Deckels auf das Gehäuse (10) an die Innenwand der Gehäuseausnehmung (11) zu liegen kommen und dadurch den Deckel gegenüber der Triebwelle (21, 21') zentrieren.

2. Maschine nach Anspruch 1, dadurch gekennzeichnet, daß die Stifte (30) auf einem konzentrisch zur Durchgangsbohrung (13') verlaufenden Kreis angeordnet sind und daß an ihnen durch Materialabtragung ein Einpaßdurchmesser (D) gebildet ist, der genau in die Gehäuseausnehmung (11) paßt.

3. Maschine nach Anspruch 1 und/oder 2, dadurch gekennzeichnet, daß die Stifte in Sackbohrungen (27 bis 29) an der Innenseite (13a) des Deckels gepreßt sind und daß ihr durch die Materialabtragung gebildeter Außendurchmesser (D) konzentrisch zu einem Einpaßdurch (31) verläuft, welcher an der Außenseite des Deckels (13) ausgebildet ist.

4. Maschine nach einem der Ansprüche 1 bis 3, dadurch gekennzeichnet, daß drei oder mehr Stifte (27, 28, 29) in regelmäßigen Abständen auf einem Kreis (d) angeordnet sind, der kleiner ist als der Durchmesser (D) der als Bohrung (14) ausgebildeten Gehäuseausnehmung (11).

5. Maschine nach Anspruch 1, dadurch gekennzeichnet, daß die Stifte (38 bis 41) in unregelmäßigen Abständen angeordnet sind und daß sie an ihrer Außenseite beim Aufsetzen des Deckels (113) infolge eines geringen Überstehmaßes (a) über die Gehäuseausnehmung hinaus durch deren Innenwand eine Materialverdrängung erfahren.

6. Maschine nach Anspruch 1 und 5, dadurch gekennzeichnet, daß die Stifte (38 bis 41) an einander diametral gegenüberliegenden Orten der Innenseite (113a) des Deckels (113) angeordnet sind.

**Claims**

1. A gear machine — pump or motor — comprising internally or externally meshing gear wheels (16, 17) which are arranged in a housing recess (11) closed at least on one side by a cover (13, 113) and wherein a throughbore (13') through which the drive shaft (21, 21') passes with clearance, is formed in the cover, characterised in that, a plurality of pins (30; 38 to 41) are so arranged on the inside (13a, 113a) of the cover (13, 113) that, when mounting the cover on the housing (10) they come to rest on the inner wall of the housing recess (11) and thus centre the cover with respect to the drive shaft (21, 21').

2. A machine according to claim 1, characterised in that, the pins (30) are arranged in a circle extending concentrically with respect to the throughbore (13') and that, by removal of material, they are provided with a fitting diameter (D) which fits exactly in the housing recess (11).

3. A machine according to claim 1 and/or 2, characterised in that, the pins are forced into blind bores (27 to 29) on the inside (13a) of the cover and that their outer diameter (D) formed by the removal of material extends concentrically with respect to a fitting (31) which is formed on the outside of the cover (13).

4. A machine according to one of claims 1 to 3, characterised in that, three or more pins (27, 28, 29) are arranged at uniform distances in a circle (d) which is smaller than the diameter (D) of the housing recess (11) formed as a bore (14).

5. A machine according to claim 1, characterised in that, the pins (38 to 41) are arranged at non-uniform distances and that, on their outside, they experience a displacement of material as a result of a slight overhang (a) beyond the housing recess when the cover (113) is mounted due to the inner wall thereof.

6. A machine according to claim 1 and 5, characterised in that, the pins (38 to 41) are arranged on the inside (113a) of the cover (113) at locations diametrally opposite one another.

**Revendications**

1. Machine à engrenage — pompe ou moteur — possédant des pignons (16, 17) engrenant intérieurement ou extérieurement, qui sont disposés dans la cavité (11) d'un carter fermé d'un côté au moins par un flasque (13, 113), le flasque étant pourvu d'un perçage (13') traversé avec jeu par l'arbre d'entraînement ou de sortie (21, 21'), caractérisée en ce que plusieurs goupilles (30; 38 à 41) sont disposées de telle manière sur le côté intérieur (13a, 113a) du flasque (13, 113) qu'à la mise en place du flasque sur le carter (10), elles s'appliquent contre la paroi de la cavité (11) du carter et centrent ainsi le flasque par rapport à l'arbre (21, 21').

2. Machine selon la revendication 1, caractérisée en ce que les goupilles (30) sont disposées sur un cercle concentrique ou perçage (13') et en ce qu'un diamètre d'ajustement (D) s'ajustant exactement dans la cavité (11) du carter est formé sur les goupilles par enlèvement de matière.

3. Machine selon la revendication 1 et/ou 2, caractérisée en ce que les goupilles sont pressées dans des trous borgnes (27 à 29) sur le côté intérieur (13a) du flasque et en ce que leur diamètre extérieur (D), formé par enlèvement de matière, est concentrique à une protubérance de fixation (31) formée sur le côté extérieur du flasque (13).

4. Machine selon une des revendications 1 à 3, caractérisée en ce que trois ou davantage de goupilles (30) sont uniformément réparties sur un cercle (d) qui est plus petit que le diamètre (D) d'une partie correspondante en forme d'alésage (14) de la cavité (11) du carter.

5. Machine selon la revendication 1, caractérisée en ce que les goupilles (38 à 41) sont disposées à des distances variables les unes des autres et en ce que, à la mise en place du flasque (113) sur le carter, du fait qu'elles font légèrement saillie (a) par rapport à la cavité du carter, une partie du matériau des goupilles est refoulée par la paroi de la cavité.

6. Machine selon la revendication 1 ou 5, caractérisée en ce que les goupilles (38 à 41) sont disposées sur des points diamétralement opposés du côté intérieur (113a) du flasque (113).

Fig. 2

Fig. 1

5

0 048 322

Fig. 4

Fig. 3

Fig. 5

7

# Fig. 6

# Fig. 7